# EUROPÄISCHE PATENTSCHRIFT

(11) **EP 0 355 490 B1**
(45) Veröffentlichungstag und Bekanntmachung des Hinweises auf die Patenterteilung: **21.04.1993**
(21) Anmeldenummer: 89114156.6
(22) Anmeldetag: 01.08.1989
(51) Int. Cl.: B60Q 1/52

(54) **Kollisionswarneinrichtung für Kraftfahrzeuge**
Collision-warning device for motor vehicles
Avertisseur de collision pour véhicules

(30) Priorität: 16.08.1988 DE 3827729
(43) Veröffentlichungstag der Anmeldung: 28.02.1990
(73) Patentinhaber: ROBERT BOSCH GMBH, 70442 Stuttgart (DE)
(72) Erfinder: Knoll, Peter, Prof.-Dr.-Ing., D-7505 Ettlingen 1 (DE); Brägas, Peter, Dipl.-Ing., D-3200 Hildesheim (DE)

(56) Entgegenhaltungen:
- EP-A- 0 109 056
- DE-U- 8 700 063
- FR-A- 2 606 717
- GB-A- 2 139 445

## Beschreibung

### Stand der Technik

Die Erfindung betrifft eine Kollisionswarneinrichtung für Kraftfahrzeuge, insbesondere zur Vermeidung von Kollisionen mit stehenden Hindernissen im Nahbereich eines Kraftfahrzeugs.

Es sind Kollisionswarneinrichtungen für Kraftfahrzeuge bekannt und am Markt erhältlich, die mit Hilfe von Ultraschall-Sensoren den Abstand zu anderen Gegenständen im Fahrzeugheckbereich bei eingelegtem Rückwärtsgang ermitteln können. Bei Unterschreitung eines vorgegebenen Mindestabstands wird ein Warnsignal für den Fahrer abgegeben.

Die Ultraschall-Sensoren sind Bestandteil einer an sich allgemein bekannten Abstandsmeßeinrichtung zu einer berührungslosen Abstandsmessung, wobei ein Ultraschall-Sender für die Messung ein kurzes Ultraschall-Signal in Richtung auf den entfernt liegenden Gegenstand, dessen Abstand vom Sensor aus gemessen werden soll, abgibt. Am Gegenstand wird das Ultraschall-Signal reflektiert und mit einem Ultraschall-Empfänger der Abstandsmeßeinrichtung wieder empfangen. Die Laufzeit des Echosignals über die zweifache Abstandslänge wird über eine Zählanordnung gemessen und die ermittelte Laufzeit über die bekannte Schallgeschwindigkeit in ein Längenmaß für die Abstandsstrecke umgerechnet.

Es sind auch optische Meßmethoden mit Infrarotlicht für eine Abstandsmessung bekannt, wobei beispielsweise eine Phasendifferenzmessung durchgeführt wird.

Die bekannten Kollisionswarneinrichtungen für Kraftfahrzeuge sind als Einparkhilfen gedacht, so daß die Ultraschall-Sensoren bevorzugt im Fahrzeugheckbereich angebracht sind und nach hinten abstrahlen. Es soll damit nur eine Information erhalten werden, ob der Fahrer noch rückwärts einen Freiraum zum Rangieren hat. Ersichtlich ist daher der Abstrahlwinkel für die Ultraschall-Signale ziemlich unkritisch. Der Fahrer muß die Situation ohnehin von sich aus beurteilen und die Entscheidung treffen, welche Richtung er einschlagen muß, um eine Kollision mit einem Hindernis zu vermeiden, da er nur eine Information über einen fehlenden Freiraum im Heckbereich erhält.

Weitere Informationen und Entscheidungshilfen für den Fahrer sind schon deshalb nicht möglich, weil mit den bekannten Kollisionswarneinrichtungen nur ganz allgemein vor einem Hindernis mit dem geringsten Abstand im Heckbereich gewarnt wird, ohne daß Informationen über die Lage bzw. Richtung des Hindernisses und gegebenenfalls seine Ausdehnung ermittelt werden.

Sowohl mit den Ultraschall- als auch den Infrarotmeßverfahren ist es allgemein bekannt, durch Verwendung einer schmalen Sendekeule für die ausgestrahlten Signale zusätzlich zu der Abstandsmessung eine Lagebestimmung bzw. Richtungsbestimmung zu Meßobjekten hin durchzuführen. Dazu wird zusätzlich eine Schwenkvorrichtung benötigt, die eine räumliche Abtastung des Beobachtungsfeldes ermöglicht. Die Lagebestimmung wird somit aus der Stellung der Schwenkvorrichtung ermittelt; die Abstandsbestimmung wird aus der Information gewonnen, die in dem vom Objekt reflektierten Signal, beispielsweise Laufzeit oder Phasendifferenz, enthalten ist.

In der GB-A-2 139 445 wird ein optoelektronisches Radarsystem mit den Merkmalen des Oberbegriffes des Anspruchs 1 vorgeschlagen, das ein vor dem Fahrzeug befindliches Hindernis erfaßt und dessen Abstand zum Fahrzeug ermittelt. Dabei wird der optische Sender in Ahängigkeit vom Lenkwinkel des Fahrzeuges geschwenkt, so daß auch bei Kurvenfahrten ein Hindernis im Schwenkbereich erkennbar ist. Die Abstandsbestimmung zum Hindernis erfolgt durch Laufzeitdifferenzmessung der optischen Strahlung. Da der optische Strahl sehr schmal ausgebildet ist, erfaßt er im wesentlichen größere Hindernisse, die weiter vor dem Fahrzeug liegen.

Diese Schenkverfahren, bei denen an bestimmten Schwenkpositionen sowohl eine Lagebestimmung als auch Abstandsbestimmung ermittelt wird, haben den Nachteil, daß die Zeit für eine vollständige Abtastung des Beobachtungsfeldes mit wachsender Winkelauflösung stark zunimmt. Bei zeitkritischen Anwendungen, beispielsweise beim Einsatz in Kraftfahrzeugen mit dessen schnellen Lageveränderungen, sind diese Verfahren oft zu langsam und damit ungeeignet.

Abstandsmessungen nach der Ultraschallmethode sind in gewünschter Weise sehr genau, haben jedoch den Nachteil, daß sie wegen der relativ geringen Schallgeschwindigkeit ziemlich langsam arbeiten. Die minimale Zeit für eine Einzelmessung unter festem Winkel liegt in einer Größenordnung von ca. 30 ms. Der Einsatz im Fahrzeug mit einer Winkelabtastung durch eine Ultraschall-Sendekeule ist wegen der schnellen Abstandsänderungen, durch die es auf eine besonders schnelle Aktualisierung momentaner Meßwerte ankommt, unbefriedigend.

Mit den Infrarotmeßmethoden lassen sich prinzipiell kürzere Meßzeiten erreichen, jedoch ist hier der technische Aufwand bei vergleichsweise geringer Genauigkeit beträchtlich höher.

### Vorteile der Erfindung

Die Kollisionswarneinrichtung für Kraftfahrzeuge, insbesondere zur Vermeidung von Kollisionen mit stehenden Hindernissen im Nahbereich eines Kraftfahrzeugs mit den Merkmalen des Hauptanspruchs kann ermitteln, ob bei dem eingeschlagenen Fahrzeugkurs Kollisionsgefahr mit einem Hindernis besteht und den Fahrer über eine Anzeigeeinheit, beispielsweise durch einen akustischen Warnton, alarmieren. Die Einrichtung kann somit "vorausschauend" errechnen, ob bei gleichbleibender Fahrweise Kollisionsgefahr mit einem Gegenstand besteht oder nicht. Der Abstand und die Lage von Gegenständen relativ zum eigenen Fahrzeug wird im Umfeld des Fahrzeugs in einer Art von Rundumsicht ermittelt und entsprechende Signale einer Auswerteeinheit mit Rechner zugeführt, die diese Signale mit fahrzeugspezifischen Signalen zur Kursermittlung oder vorausschauenden Kursberechnung verknüpft. Der Fahrer wird nur dann gewarnt, wenn tatsächlich eine Gefahr einer Kollision besteht. Kollisionswarneinrichtungen dieser Art sind insbesondere beim Rangieren in engen Parklücken oder in Parkhäusern von großem Nutzen, da hier herkömmliche Warnsysteme meist permanent ansprechen würden. Die Warnung des Fahrers erfolgt somit bereits beim Erkennen eines Kollisionskurses. Die Kollisionswarneinrichtung ist mit herkömmlichen Sensoren und Komponenten realisierbar.

Besonders vorteilhaft wird als Abstandsmeßeinrichtung je eine Sende-/Empfangseinheit für Ultraschall-Signale und für eine schmale Sendekeule eines Infrarot-Strahls an diagonal gegenüberliegenden Ecken eines Kraftfahrzeugs angebracht. Der Infrarot-Strahl dient zur Lageerkennung und Zuordnung einer Winkelposition für ein Hindernis in je einem 270°-Winkelbereich vor bzw. hinter dem Kraftfahrzeug und seitlich davon. Mit der schmalen Sendekeule des Infrarot-Strahls wird jeweils dieser Bereich schnell abgetastet. Zudem sind die 270°-Winkelbereiche in jeweils drei 90°-Bereiche unterteilt, die von je einer Ultraschallmeßeinheit umfaßt sind. Damit wird die hohe Genauigkeit der Ultraschallmessung bei der Abstandsmessung und die schnellere Datenerfassung mit Infrarotlicht zur Lagebestimmung ausgenützt, wobei der gesamte Bereich um ein Fahrzeug herum erfaßt wird.

### Zeichnung

Ein Ausführungsbeispiel der Erfindung ist in der Zeichnung dargestellt und wird in der nachfolgenden Beschreibung näher erläutert.

Es zeigen:
- Figur 1: eine Draufsicht auf ein Kraftfahrzeug mit zwei diagonal angebrachten Einheiten zur Abstands- und Lageerkennung,
- Figur 2: ein Blockschaltbild für die Signalverarbeitung.

### Beschreibung des Ausführungsbeispiels

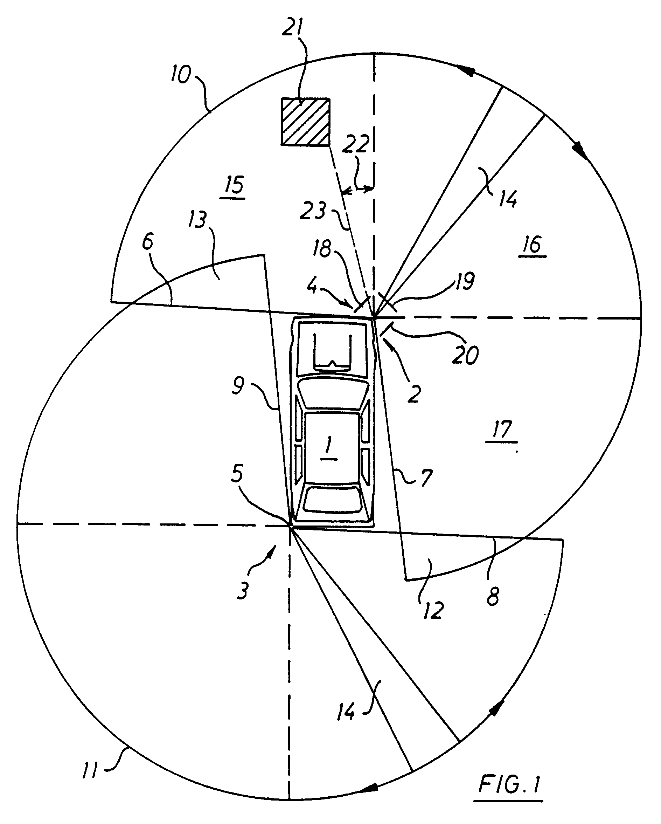

In Figur 1 ist ein Kraftfahrzeug 1 von oben her in der Draufsicht dargestellt, an dem an diagonal gegenüberliegenden Ecken 2, 3 jeweils eine Einheit einer Abstandsmeßeinrichtung zur berührungslosen Abstands- und Lageerkennung bzw. Entfernungs- und Richtungswinkelbestimmung von Hindernissen im Nahbereich des Kraftfahrzeugs 1 angebracht ist.

Der Meßbereich der ersten Einheit 4 erstreckt sich über einen Winkelbereich von ca. 270° vor dem Kraftfahrzeug 1 und um die rechte Seite des Kraftfahrzeugs 1 herum nach hinten. Der Meßbereich der zweiten Einheit 5 an der linken hinteren Ecke 3 des Kraftfahrzeugs 1 erstreckt sich ebenfalls über einen Winkelbereich von ca. 270° hinter dem Kraftfahrzeug 1 um die linke Seite des Kraftfahrzeugs 1 nach vorne herum. Der Meßbereich der ersten Einheit 4 erstreckt sich somit in einem Winkelbereich zwischen den Linien 6 und 7 und entsprechend der Meßbereich der zweiten Einheit 5 zwischen den Linien 8 und 9.

Hindernisse werden von der ersten und zweiten Einheit 4, 5 in einem Abstand erfaßt, der wenigstens dem Radius der eingezeichneten Kreisbögen 10, 11 entspricht und damit etwas größer als die Fahrzeuglänge ist. Dadurch überlappen sich die Meßbereiche (in Fig. 1 an den Stellen 12 und 13), wodurch der gesamte Nahbereich eines Kraftfahrzeugs zur Erkennung und Lagebestimmung von Hindernissen zweckmäßig erfaßt wird.

In jeder Einheit 4, 5 ist eine schmale Sendekeule eines Infrarot-Strahls 14 mit Hilfe einer mechanischen Scan-Vorrichtung über den Winkel von ca. 270° zwischen den Linien 6 und 7 bzw. 8 und 9 periodisch schwenkbar.

Der 270°-Schwenkwinkelbereich für jeden Infrarot-Strahl 14 ist in jeweils drei aneinandergrenzende 90°-Winkelbereiche, z. B. 15, 16, 17 aufgeteilt; in dem weiteren 90°-Winkelbereich zur Ergänzung des Vollwinkels liegt das Kraftfahrzeug 1.

Jeder der je drei 90°-Winkelbereiche 15, 16, 17 wird von einer Ultraschallmeßeinheit 18, 19, 20 (vergrößert herausgezeichnet) erfaßt, wobei die wirksamen Flächen der entsprechenden Ultraschall-Sende-/Empfangseinheiten in Richtung dieser 90°-Winkelbereiche 15, 16, 17 liegen.

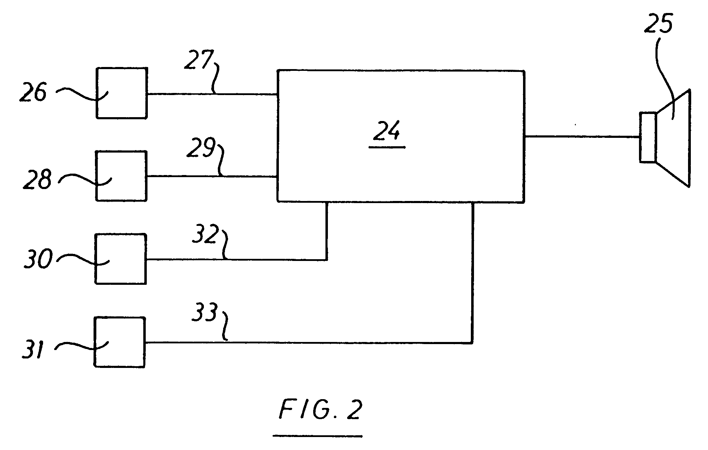

Die dargestellte Anordnung hat folgende Funktion: Der schmale Infrarot-Strahl 14 wird schrittweise mit einer Motorsteuerung über den gesamten, zugeordneten 270°-Winkelbereich bzw. über die drei 90°-Winkelbereiche 15, 16, 17 geschwenkt. Trifft der Infrarot-Strahl 14 auf ein Hindernis 21, wird ein Teil des Lichts diffus zurückreflektiert und in einem fotoempfindlichen Empfänger nachgewiesen. Anzahl, Richtung und Ausdehnung aller im Suchbereich befindlichen Hindernisse können auf diese Weise einfach und schnell ermittelt werden. Entsprechende Lagesignale, die die Winkelposition 22 gegenüber einer Richtung in Fahrzeuglängsachse beinhalten, werden an eine Auswerteeinheit (Figur 2) gegeben.

Zur Entfernungsbestimmung wird jeder der drei 90°-Winkelbereiche, z. B. 15, 16, 17 von einem eigenen Ultraschall-Signal aus den Ultraschallmeßeinheiten, z. B. 18, 19, 20 überdeckt. Nach der bekannten Puls-Echo-Methode wird somit die Entfernung zum nächstgelegenen Hindernis im zugeordneten 90°-Winkelbereich ausgewertet und ein entsprechendes Abstandssignal bzw. ein in Polarkoordinaten ausgedrückter Abstandsradius 23 der Auswerteeinheit (Figur 2) zugeführt.

In jedem der 90°-Winkelbereiche entspricht der Abstandsradius immer dem jeweiligen Mindestabstand eines Hindernisses oder Hindernisbereiches, so daß bei ausgedehnten Hindernissen eine leichte Verzerrung in Kauf genommen werden muß. In jedem Fall ist jedoch sichergestellt, daß das nächstgelegene Hindernis mit der kürzesten Entfernung mit seinen entsprechend zugeordneten Abstands- und Lagesignalen für die Weiterverarbeitung in der Auswerteeinheit erfaßt wird.

In Figur 2 ist eine Auswerteeinheit 24 dargestellt, die im wesentlichen aus einem elektronischen Rechner besteht und der ein Lautsprecher 25 nachgeschaltet ist.

Eingangsseitig sind schematisch zusammengefaßt die Infraroteinheiten 26, die über eine Leitung 27 der Auswerteeinheit 24 die Lage- bzw. Winkelsignale eines Hindernisses zuführen.

Weiter sind im Block 28 schematisch zusammengefaßt die Ultraschalleinheiten, z. B. 18, 19, 20 dargestellt, die über eine Leitung 29 mit der Auswerteeinheit 24 verbunden sind und an diese die entsprechenden Abstands- bzw. Abstandsradius-Signale abgeben. Mit den Blöcken 30 und 31 sind schematisch Gebereinheiten dargestellt, die fahrzeugspezifische Angaben über den gerade gefahrenen oder eingestellten Kurs eines Fahrzeugs zur Verfügung stellen. Entsprechende Signale werden über die Leitungen 32 und 33 der Auswerteeinheit 24 zugeführt.

Der Block 30 kann beispielsweise einen Lenkwinkelgeber enthalten, welcher den Winkel zwischen Fahrzeuglängsachse und Bewegungsrichtung des Fahrzeugs ermittelt. Der Block 31 kann eine (in jedem Fahrzeug ohnehin vorhandene) Entfernungsmeßeinrichtung enthalten, die eine Aussage über den vom Fahrzeug zurückgelegten Weg zuläßt. Zusätzlich könnten in den Blöcken 30 und 31 auch Geber zur Ermittlung der eingestellten Fahrrichtung (Vorwärts- oder Rückwärtsgang) und ein Geschwindigkeitsgeber enthalten sein.

Je mehr fahrzeugspezifische Daten, die den gerade gefahrenen oder eingestellten Fahrzeugkurs beeinflussen, ermittelt werden, umso genauer und aussagekräftiger kann von der Auswerteeinheit 24 ein eventueller Kollisionskurs ermittelt werden.

Dazu wird der über die Auswerteeinheit 24 entsprechend dem vorliegenden Betriebszustand berechnete Kurs mit den über die Leitungen 27 und 29 zugeführten Abstands- und Lagesignalen verglichen, ob eine Kollisionsgefahr besteht bzw. ob sich Koordinaten für den ermittelten Kurs und Koordinaten für ermittelte Hindernisse überdecken. Für diesen Fall wird ein Signal an eine Anzeigeeinheit, hier den Lautsprecher 25, gegeben, wodurch der Fahrer durch einen Warnton alarmiert wird.

Diese akustische Anzeigeeinheit kann durch eine optische Anzeigeeinheit, beispielsweise durch eine Blinkleuchte, ersetzt oder ergänzt sein. In einer komfortableren Ausführung kann die Auswerteeinheit 24 ermitteln, mit welcher Richtung eines Lenkradeinschlags die Kollisionsgefahr gegebenenfalls behoben werden kann und entsprechende Signale an den Fahrer abgeben, beispielsweise mit je einer Blinkleuchte für Rechts- und Linksdrehung des Lenkrads.

In einer weiteren Ausgestaltung und Verbesserung kann die Anzeigeeinheit aus einem graphikfähigen Bildschirm bestehen, auf dem das Fahrzeug mit seinen Abmessungen und eventuelle Hindernisse optisch angezeigt sind. Gleichzeitig wird der von der Auswerteeinheit 24 errechnete Fahrkurs angezeigt oder ein flächiger Fahrbereich, wo keine Kollisionsgefahr vorliegt. Bei einer Überdeckung des Kurses mit der Graphik eines Hindernisses wird ein möglicher Kollisionskurs für den Fahrer ersichtlich. Gleichzeitig werden seine Maßnahmen, beispielsweise eine Änderung des Lenkeinschlags in ihrer Auswirkung auf einen möglichen Kollisionskurs sofort angezeigt.

## Patentansprüche

1. Kollisionswarneinrichtung für ein Kraftfahrzeug mit wenigstens einer im einem vorgegebenen Schwenkbereich schwenkbar angeordneten optoelektronischen Einrichtung zur Erfassung der Lage eines Hindernisses in Fahrtrichtung innerhalb eines schmalen Strahlungswinkels, mit wenigstens einem Sensor als Lenkwinkelsensor und/oder einem Streckenmeßsensor zur Erfassung des Fahrkurses des Fahrzeuges, mit einer Auswerteeinheit zur Bestimmung der Lage und des Abstandes des Hindernisses und mit einer Anzeigeeinheit, dadurch gekennzeichnet, daß die wenigstens eine optoelektronische Einrichtung den vorgegebenen Schwenkbereich (10, 11) mit einer Infrarot-Meßeinrichtung schrittweis abtastet und die Winkelposition (22) zwischen der Fahrtrichtung und dem Hindernis (21) ermittelt, daß der vorgegebene Schwenkbereich (10, 11) in mehrere Bereiche (15, 16, 17) aufgeteilt ist, denen jeweils eine Ultraschall-Meßeinrichtung (18, 19, 20) zugeordnet ist, daß die zugeordnete Ultraschall-Meßeinrichtung (18, 19, 20) den Abstand zum Hindernis (21) nach dem Echo-Prinzip ermittelt und daß die Auswerteeinheit (24) ausgebildet ist, aus der Winkelposition (22) und dem Abstand die Lage des Hindernisses (21) unter Berücksichtigung des vorliegenden Fahrkurses bsw. Betriebszustandes des Fahrzeuges (1) zu ermitteln und auszugeben.

2. Kollisionswarneinrichtung nach Anspruch 1, dadurch gekennzeichnet, daß ein Sensor ein Fahrtrichtungsgeber und/oder ein Geschwindigkeitsgeber ist.

3. Kollisionswarneinrichtung nach einem der Ansprüche 1 oder 2, dadurch gekennzeichnet, daß die Anzeigeeinheit bei Kollisionsgefahr ein akustisches und/oder optisches Warnsignal abgibt.

4. Kollisionswarneinrichtung nach einem der Ansprüche 1 bis 3, dadurch gekennzeichnet, daß die Anzeigeeinheit durch je ein optisches und/oder akustisches Signal eine Änderung des Einschlagwinkels des Lenkrades nach links oder rechts zur Behebung der Kollisionsgefahr angibt.

5. Kollisionswarneinrichtung nach einem der Ansprüche 1 bis 4, dadurch gekennzeichnet, daß die Anzeigeeinheit einen graphikfähigen Bildschirm enthält, auf dem die Abmessungen des Fahrzeuges und eventuelle Hindernisse angezeigt werden und gleichzeitig ein errechneter, möglicher Fahrkurs oder flächiger Fahrbereich, wo keine Kollisionsgefahr vorliegt, angezeigt werden.

6. Kollisionswarneinrichtung nach einem der Ansprüche 1 bis 5, dadurch gekennzeichnet, daß die Auswerteeinheit (24) aufgrund des vorliegenden Betriebszustandes errechnet, ob überhaupt eine Bewegung des Fahrzeugs, z.B. beim Einparken, ohne Kollision bei Beachtung der gegebenen Randbedingungen, wie z.B. Lage und Abstand von Gegenständen maximaler Lenkeinschlag und Länge des Fahrzeugs, an erkannten Gegenständen vorbei oder zwischen Gegenständen möglich ist, und daß ein entsprechendes Signal von der Anzeigeeinheit abgegeben wird.

7. Kollisionswarneinrichtung nach einem der Ansprüche 1 bis 6, dadurch gekennzeichnet, daß die Abstandsmeßeinrichtung eine Sende-/Empfangseinheit (4, 5) für Ultraschall-Signale und für eine schmale Sendekeule eines Infrarot-Strahls (14) an zwei diagonal gegenüberliegenden Ecken (2, 3) eines Kraftfahrzeugs (1) umfaßt, daß der Infrarot-Strahl (14) in dem freien Winkelbereich von ca. 270° vor bzw. hinter dem Kraftfahrzeug und seitlich davon in einer etwa horizontalen Ebene mit einer Schwenkeinrichtung verschwenkbar ist, so daß durch zwei Infrarot-Sende/Empfangseinheiten der gesamte Bereich um das Kraftfahrzeug (1) erfaßt ist, daß die zwei Sende-/Empfangseinheiten für die Ultraschall-Signale aus je drei Meßeinheiten (18, 19, 20) bestehen, die je eine von drei aneinandergrenzenden 90°-Winkelbereich (15, 16, 17) umfassen, wobei die drei 90°-Winkelbereichen (15, 16, 17) dem 270°-Schwenkwinkelbereich des Infrarot-Strahls (14) entsprechen und damit in jedem 90°-Winkelbereich (15, 16, 17) ein Abstandssignal zu einem dort vorhandenen Gegenstand (21) durch die zugeordneten Ultraschallmeßeinheiten nach dem Echo-Prinzip gebildet wird, dem ein Lagesignal bzw. eine Winkelposition, das über die schnellere Infrarotmeßeinheit gebildet wird, zugeordnet ist.

## Claims

1. Collision warning device for a motor vehicle, having at least one optoelectronic device, disposed to be swivellable in the a [sic], predetermined swivelling range, for the detection of the position of an obstacle in the direction of travel within a narrow beam angle, having at least one sensor as the steering angle sensor and/or a path measurement sensor for the detection of the course of travel of the vehicle, having an evaluation unit for the determination of the position and of the distance of the obstacle and having an indicating unit, characterised in that the at least one optoelectronic device scans the predetermined swivelling range (10, 11) stepwise with an infrared measuring device and determines the angular position (22) between the direction of travel and the obstacle (21), in that the predetermined swivelling range (10, 11) is split up into a plurality of ranges (15, 16, 17), with which in each case one ultrasonic measuring device (18, 19, 20) is associated, in that the associated ultrasonic measuring device (18, 19, 20) determines the distance from the obstacle (21) using the echo principle, and in that the evaluation unit (24) is designed to determine and to output, from the angular position (22) and the distance, the position of the obstacle (21) taking into account the current course of travel or operational condition of the vehicle (1).

2. Collision warning device according to Claim 1, characterised in that a sensor is a direction of travel transmitter and/or a speed transmitter.

3. Collision warning device according to one of Claims 1 or 2, characterised in that in the event of a danger of collision the indicating unit emits an acoustic and/or optical warning signal.

4. Collision warning device according to one of Claims 1 to 3, characterised in that the indicating unit indicates, by in each case one optical and/or acoustic signal, a change to the lock angle of the steering wheel to the left or to the right to overcome the danger of collision.

5. Collision warning device according to one of Claims 1 to 4, characterised in that the indicating unit includes a screen with graphics capability, on which screen the dimensions of the vehicle and possible obstacles are indicated and at the same time a computed, possible course of travel or flat region of travel, where no danger of collision exists, are indicated.

6. Collision warning device according to one of Claims 1 to 5, characterised in that the evaluation unit (24) computes, on the basis of the current operational condition, whether there is any possibility at all of a movement of the vehicle, e.g. in the course of parking, without collision while observing the given boundary conditions, such as, for example, the position and distance of objects, the maximum steering lock and length of the vehicle, past detected objects or between objects, and in that a corresponding signal is emitted by the indicating unit.

7. Collision warning device according to one of Claims 1 to 6, characterised in that the distance measuring device comprises an emission/reception unit (4, 5) for ultrasonic signals and for a narrow emission lobe of an infrared beam (14) at two diagonally opposite corners (2, 3) of a motor vehicle (1), in that the infrared beam (14) is swivellable by a swivel device in the free angular range of approximately 270° in front of and, respectively, behind the motor vehicle and laterally therefrom in an approximately horizontal plane, so that the entire region around the motor vehicle (1) is covered by two infrared emission/reception units, in that the two emission/reception units for the ultrasonic signals comprise in each instance three measuring units (18, 19, 20), which cover in each instance one of any of three mutually adjoining 90° angular range [sic] (15, 16, 17), the three 90° angular ranges (15, 16, 17) corresponding to the 270° angular range of swivel of the infrared beam (14), and thus a signal representing the distance from an object (21) situated therein is formed within each 90° angular range (15, 16, 17) by the associated ultrasonic measuring units using the echo principle, with which signal a position signal or an angular position, which is formed by means of the more rapid infrared measuring unit, is associated.

## Revendications

1. Dispositif avertisseur de collision, pour un véhicule à moteur avec au moins un dispositif opto-électronique disposé dans une zone de pivotement prédéfinie pour détecter la position d'un obstacle dans le sens de la marche à l 'intérieur d'un angle étroit de rayonnement, avec au moins un détecteur fonctionnant comme détecteur de l'angle de braquage du volant et/ou un détecteur de mesure de distance pour détecter la trajectoire du véhicule, avec une unité d'exploitation, pour déterminer la position et la distance de l'obstacle et avec une unité indicatrice, dispositif avertisseur de collision caractérisé en ce qu'au moins le dispositif opto-électronique balaie la zone de pivotement prédéfinie (10, 11) pas à pas avec un dispositif de mesure infra-rouge et détecte la position angulaire (22) entre la direction de marche et l'obstacle (21), en ce que la zone de pivotement prédéfinie (10, 11) est subdivisée en plusieurs zones (19, 16, 17), auxquelles sont associées respectivement des dispositifs de mesure à ultra-sons (18, 19, 20), en ce que les dispositifs de mesure a ultra-sons (18, 19, 20) détectent la distance à l'obstacle (21) selon le principe de mesure d'écho et à partir de la position angulaire (22) et de la distance la position de l'obstacle (21) en prenant en considération la trajectoire momentanée ou l'état de marche du véhicule (1).

2. Dispositif avertisseur de collision selon la revendication 1, caractérisé en ce qu'un détecteur est un capteur de sens de marche et/ou un capteur de vitesse.

3. Dispositif avertisseur de collision selon l'une des revendication 1 ou 2, caractérisé en ce que l'unité indicatrice en cas de risque de collision délivre un signal acoustique et/ou optique d'avertissement.

4. Dispositif avertisseur de collision selon l'une des revendications 1 à 3, caractérisé en ce que l'unité indicatrice indique au moyen d'un signal optique et/ou acoustique une variation de l'angle de braquage du volant vers la gauche ou vers la droite pour éviter le risque de collision.

5. Dispositif avertisseur de collision selon l'une des revendications 1 à 4, caractérisé en ce que l'unité indicatrice contient un écran susceptible de donner un graphique sur lequel sont indiquées les dimensions du véhicule et des obstacles éventuels et en même temps est indiqué une trajectoire possible, calculée ou une zone de marche aplanie, où il n'y a pas de risque de collision.

6. Dispositif avertisseur de collision selon l'une des revendications 1 à 5, caractérisé en ce que l'unité d'exploitation (24) calcule en fonction de l'état de marche momentané, s'il est possible en gros d'avoir un mouvement du véhicule , par exemple au moment de parquer, sans collision en faisant attention aux conditions limites données ,comme par exemple la position et la distance d'objets, le braquage maximal et la longueur du véhicule, par rapport à des objets reconnus ou entre de tels objet et en ce qu'un signal correspondant est délivré par l'unité indicatrice.

7. Dispositif avertisseur de collision selon l'une des revendications 1 à 6, caractérisé en ce que le dispositif de mesure de distance comprend une unité émettrice/réceptrice (4, 5) pour signaux d'ultra-sons et pour un lobe étroit de rayonnement infra-rouge (14) dans les deux angles opposés en diagonal (2, 3) d'un véhicule à moteur (1), en ce qu'on peut faire pivoter le rayonnement infra-rouge (14) dans la zone libre angulaire environ de 270° en avant et en arrière du véhicule à moteur et sur les côtés de celui-ci dans un plan sensiblement horizontal au moyen d'un dispositif de pivotement, de telle sorte que toute la zone autour du véhicule (1) et détectée au moyen de deux unités infra-rouge émettrices/réceptrices, en ce que les deux unités émettrice/réceptrice pour les signaux à ultrasons consistent chacune en trois unités de mesure (18, 19, 20) qui contient chacune l'une des trois zones angulaires adjacentes de 90° (15, 16, 17), les trois zones angulaires à 90° (15, 16, 17) correspondant à la zone angulaire de 270° du rayonnement infra-rouge (14) et de cette façon dans chaque zone angulaire de 90° (15, 16, 17) un signal de distance étant formé par les unités de mesure à ultra-sons correspondantes par rapport à un objet (21) existant à cet endroit, selon le principe des mesures 'd'écho, auquel est associé un signal de position ou un signal angulaire qui est formé au moyen de l'unité plus rapide de mesure à infra-rouge.
